Europäisches Patentamt

European Patent Office

Office européen des brevets

(11) Publication number: **0 441 228 A1**

# EUROPEAN PATENT APPLICATION

(21) Application number: **91101156.7**

(22) Date of filing: **29.01.91**

(51) Int. Cl.⁵: **B60G 21/055**

(30) Priority: **07.02.90 JP 27848/90**

(43) Date of publication of application:
**14.08.91 Bulletin 91/33**

(84) Designated Contracting States:
**DE FR**

(71) Applicant: **TOYOTA JIDOSHA KABUSHIKI KAISHA**
**1, Toyota-cho Toyota-shi**
**Aichi-ken(JP)**

(72) Inventor: **Ogiso, Satoshi**
**6-5, Hosohata, Tomoe-cho**
**Toyota-shi, Aichi-ken(JP)**

(74) Representative: **Tiedtke, Harro, Dipl.-Ing. et al**
**Patentanwälte Tiedtke-Bühling- Kinne &**
**Partner Bavariaring 4 POB 20 24 03**
**W-8000 München 2(DE)**

(54) **Suspension for steering vehicle wheel improved in connection of stabilizer.**

(57) In a suspension for a steering vehicle wheel (12) in a vehicle wherein a carrier (10) for rotatably supporting the steering vehicle wheel (12) is supported by a pair of control arms (28,30) spaced from one another substantially in a longitudinal direction of the vehicle and pivotably connected with the carrier at outside ends (24,26) thereof and with a vehicle body at inside ends thereof (32,34), a connection link is pivotably connected with an arm portion of a stabilizer (58) having an elastically deformable portion (58b) adapted to be elastically deform by a movement of the arm portion at an upper end (58a) thereof and with one of the pair of control arms (28,30) at a lower end thereof with the upper pivoted end of the connection link (54) being positioned at a rear side of the lower pivoted end of the connection link (54) so that both the steering movement and the bounding and rebounding movement of the steering vehicle wheel (12) enhance the effect of the reaction of the stabilizer (58) to return the steering wheel (46) to its neutral position.

F I G. 1

# SUSPENSION FOR STEERING VEHICLE WHEEL IMPROVED IN CONNECTION OF STABILIZER

## Background of the Invention

### Field of the Invention

The present invention relates to a suspension in a vehicle equipped with a stabilizer, and more particularly, to an improvement of a suspension for a steering vehicle wheel in the connection with the stabilizer.

### Description of the Prior Art

A type of suspension for a vehicle such as an automobile is known as shown in, for example, Japanese Patent Publication 52-9889, as including a carrier for rotatably supporting a vehicle wheel, and a pair of control arms arranged as spaced from one another substantially in a longitudinal direction of the vehicle so as to be pivotably connected with said carrier at outside ends thereof and to be pivotably connected with a vehicle body at inner ends thereof, wherein the position of a king pin axis is determined as a point of intersection of two straight lines each passing through the outer and the inner pivot end of each said control arm.

In such a vehicle wheel suspension the position of the king pin axis can be determined regardless of the length of the control arm, and therefore, the caster trail, which is the distance between the point of intersection of the king pin axis with the ground surface and the ground contact point of the vehicle wheel and determines the force to return the steering wheel after a steering, can be determined with a relatively high freedom of design.

However, the caster trail affects not only the force to return the steering wheel but also the steering stability of vehicle, wherein an optimum value for the caster trail determined in consideration of the self returning performance of the steering wheel is generally greater than that determined in consideration of the steering stability of the vehicle. Therefore, in the vehicle wheel suspension of this type it has been a problem that if the self returning performance of the steering wheel is given a preference, the steering stability is sacrificed, while conversely if the steering stability is given a preference the self returning performance of the steering wheel is sacrificed, thus rendering it difficult to improve both the steering stability and the returning performance of the steering wheel.

## Summary of the Invention

In view of the above-mentioned problem in the conventional suspension for the steering vehicle wheel, it is the object of the present invention to provide an improved suspension for a steering vehicle wheel in which the self returning performance of the steering wheel is improved without sacrificing the steering stability based upon an effective utilization of the reaction by the stabilizer which is of a type conventionally incorporated in a vehicle such as an automobile.

According to the present invention the above-mentioned object is accomplished by a suspension for a steering vehicle wheel in a vehicle having a stabilizer including an elastically deformable portion and a pair of arm portions extending from opposite ends thereof so as to be able to elastically deform said elastically deformable portion by a movement thereof, comprising a carrier for rotatably supporting the steering vehicle wheel, a pair of control arms spaced from one another substantially in a longitudinal direction of the vehicle to be pivotably connected with said carrier at outside ends thereof and with a vehicle body at inside ends thereof, and a connection link pivotably connected with said arm portion of said stabilizer at an upper end thereof and with one of said pair of control arms at a lower end thereof, wherein said upper pivoted end of said connection link is positioned at a rear side of said lower pivoted end of said connection link.

Such a suspension may be of the double wishbone type, and said pair of control arms may be the lower front and rear control arms in the double wishbone type suspension. Further, said connection link may be connected with the lower rear control arm. Further, said connection link may be connected to a middle portion of said lower rear control arm.

As is well known in the art, when the vehicle turns, the vehicle wheel at the outside of the turning bounds while the vehicle wheel at the inside of the turning rebounds due to the rolling of the vehicle body, wherein the elastically deformable portion of the stabilizer is elastically deformed by the force applied through the arm portion thereof and the connection link and generates a reaction force which suppresses the rolling of the vehicle body

According to the above-described construction, as the control arms are a pair of arms spaced from one another substantially in the longitudinal direction of the vehicle to be pivotably connected with the carrier at the outer ends thereof and with the vehicle body at the inner ends thereof, in a turning of the vehicle the control arms at the outside of the turning are pivoted rearward relative to the vehicle body, while the control arms at the inside of the turning are pivoted forward relative to the vehicle body. Further, as the connection link which is pivotably connected with the arm portion of the stabilizer at the upper end thereof and with one of the control arms at the lower end thereof is so positioned that the upper pivoted end thereof is positioned at the rear side of the lower pivoted end thereof, the connection link turns in such a manner that the lower end thereof shifts rearward relative to the upper end thereof at the outside of the turning, while the connection link turns in a manner reverse to the above manner at the inside of the turning, so as thereby to increase the elastic deformation of the elastically deformable portion of the stabilizer and thus to increase the reaction force generated in the stabilizer.

The reaction force of the stabilizer acts in the connection link as a compression force at the outside of the turning and as a tension force at the inside of the turning. Since the upper pivoted end of the connection link is positioned at the rear side of the lower pivoted end thereof, the reaction force by the stabilizer biases the control arm through the connection link forward at the outside of the turning and rearward at the inside of the turning, so that the both biasing forces act to return the steering wheel toward its neutral position.

## Brief Description of the Drawings

In the accompanying drawings,
Fig. 1 is a plan view of an embodiment of the steering vehicle wheel suspension according to the present invention constructed as a front suspension of the double wishbone type;
Figs. 2 and 3 are a rear elevation view and a side elevation view looking at the suspension shown in Fig. 1 from the rear and the inboard side of the vehicle, respectively; and
Figs. 4 and 5 are diagrammatical views corresponding to Figs. 1 and 3, respectively, illustrating the operation of the suspension shown in Figs. 1-3.

## Description of the Preferred Embodiment

In the following the present invention will be described in the form of a preferred embodiment thereof with reference to the accompanying drawings.

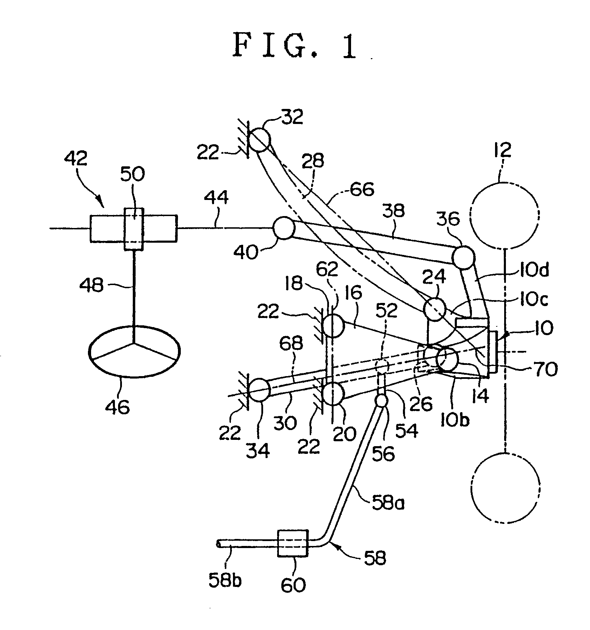

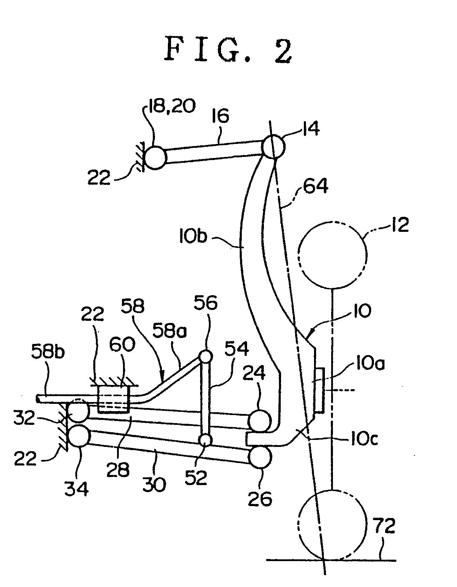

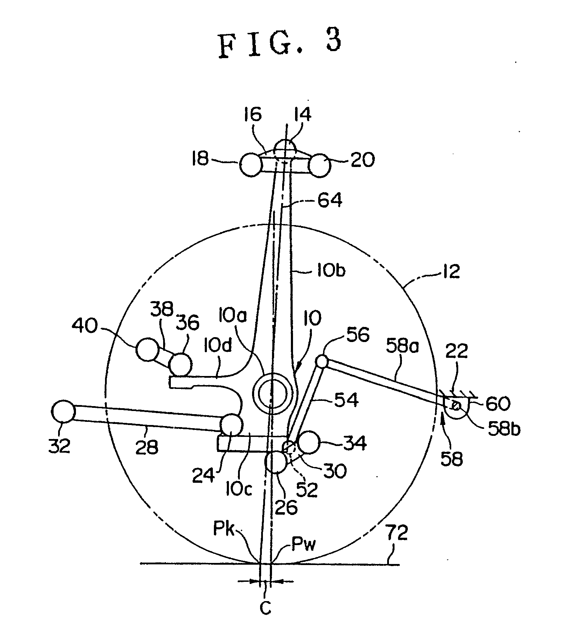

Referring first to Figs. 1-3, 10 designates a carrier for rotatably supporting a vehicle wheel 12 at a bearing portion 10a. The carrier 10 comprises an upper arm portion 10b and a lower arm portion 10c extending from the bearing portion 10a in opposite directions and a knuckle arm portion 10d extending from the bearing portion 10a in a direction traverse to those of the upper and lower arms, all being integral with the bearing portion 10a.

The upper arm portion 10b has a joint portion 14 at its upper end, and is pivotably connected with an outboard end of an upper control arm 16 at said joint portion 14. In the shown embodiment, the upper control arm 16 is an A-type arm pivotably supported from a vehicle body 22 through two joints 18 and 20.

The lower arm portion 10c has two joints 24 and 26 at its end portion and is pivotably connected with a front lower control arm 28 and a rear lower control arm 30 at said joints 24 and 26, respectively. The front and rear lower control arms are spaced apart from one another substantially in the longitudinal direction of the vehicle while extending to be more apart from one another toward the inboard side of the vehicle so as to be pivotably connected with the vehicle body 22 at inboard ends thereof through joints 32 and 34, respectively.

The knuckle arm 10d has a joint 36 at its end portion, and is pivotably connected with an outboard end of a tie rod 38 by said joint 36. An inboard end of the tie red 38 is pivotably connected with a tip end of a rack bar 44 of a steering device 42 schematically shown in Fig. 1 through joint 40. As is well known in the art, the steering device 42 operates in such a manner that a rotation of a steering wheel 46 by a driver is transmitted through a shaft 48 to a gear box 50 which converts the rotation of the shaft 48 to reciprocating movements of the rack bar 44.

In the shown embodiment, the rear lower control arm 30 bears a joint 52 and is pivotably connected with a lower end of a connection link 54 through the joint 52. An upper end of the connection link 54 is pivotably connected with an end of an arm portion 58a of a stabilizer 58 through a joint 56. As is well known in the art, the stabilizer 58 has an elastically deformable portion 58b extending in the lateral direction of the vehicle and a pair of said arm portions 58a provided at opposite ends thereof to be integral therewith, and is mounted to the vehicle body 22 by a pair of brackets 60 spaced in the lateral direction of the vehicle so as to be able to rotate about the axis of the elastically deformable portion 58b.

Though not shown in the figure the suspension for the left side front vehicle wheel is constructed in the same manner as the construction shown for the right side front vehicle wheel.

In the shown embodiment, when the vehicle wheel 12 bounds and rebounds, the upper control arm 16 pivots up and down around an axis 62 connecting the pivot centers of the joints 18 and 20, while the lower control arms 28 and 30 pivot up and down around the pivot centers of the joints 32 and 34, respectively. The up and down pivoting action of the lower control arm 30 is particularly transmitted to the stabilizer 58 through the connection link 54 so as thereby to twist the elastically deformable portion 58b thereof, thus generating a reaction force in the stabilizer which is reversely transmitted through the connection link 54 to the lower control arm 30.

The king pin axis 64 is determined by the pivot center of the joint 14 provided at the outboard end of the upper control arm 16 and the point of intersection 70 of a straight line 66 shown in Fig. 1 which connects the pivot centers of the joints 24 and 32 provided at the opposite ends of the lower control arm 28 with a straight line 68 which connects the pivot centers of the joints 26 and 34 provided at the opposite ends of the lower control arm 30. The caster trail is the distance C between the ground contact point Pw of the vehicle wheel with the ground surface 72 and the point of intersection Pk of the king pin axis 66 with the ground surface 72. In a turning of the vehicle the carrier 10 turns with the vehicle wheel 12 supported thereby around the king pin axis 64.

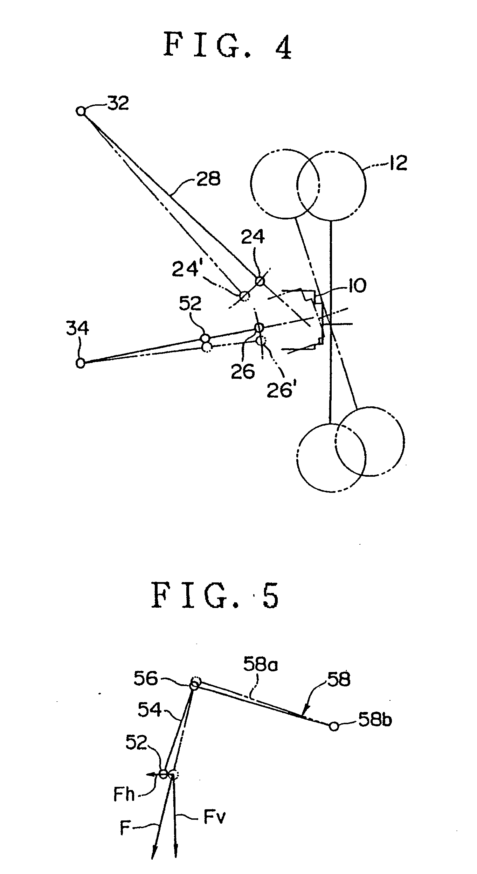

The operation of the above embodiment will be described with reference to Figs. 4 and 5, wherein the solid lines show the conditions of the various elements when the vehicle is running straight forward, while the phantom lines show the conditions of those when the vehicle is turning leftwardly.

Referring to Figs. 4 and 5, assuming that the vehicle is turning leftwardly, the carrier turns with the vehicle wheel 12 in the anti-clockwise direction around the king pin axis 64 as viewed in Fig. 4 with the joints 24 and 26 being shifted to 24' and 26', respectively. Therefore, the control arms 28 and 30 turn around the joints 32 and 34 in the clockwise direction, respectively, thereby shifting the joint 52 rearward. Therefore, the joint 56 is shifted upward by the connection link 54 while the arm portion 58a of the stabilizer 58 is turned around the axis of the elastically deformable portion 58b so as to twist the latter around the axis thereof. The reaction force thus generated in the stabilizer 58 is transmitted through the connection link 54 and the joint 52 to the control arm 30.

Expressing the reaction force applied to the control arm 30 by the stabilizer by F, a compression force in the connection link 54, and the vertical and horizontal components thereof by Fv and Fh, respectively, the component Fv acts in the direction of turning the control arm 30 downward around the joint 34 with an effect of suppressing the rolling of the vehicle body due to the turning of the vehicle. On the other hand, the component Fh acts in the direction of turning the control arm 30 anti-clockwise around the joint 34 with an effect of biasing the carrier 10 with the vehicle wheel 12 to be turned around the king pin axis 64 in the clockwise direction as viewed in Fig. 4. This biasing force is transmitted through the knuckle arm 10d and the tie rod 38 to the rack bar 44, and further through the gear box 50 and the steering shaft 48 to the steering wheel 46 so as to bias the steering wheel toward its neutral position.

It will be noted that, at the inside vehicle wheel suspension, in the turning of the vehicle, the connection link 54 is in tension, and the joint 52 is shifted upward, and therefore the horizontal component of the stabilizer reaction force biases the control arm 30 rearward, thus generating the same biasing action of returning the steering wheel to its neutral position. Further, when the vehicle body rolls in the turning of the vehicle, at the outside vehicle wheel suspension the joint 52 is shifted upward due to the bounding of the vehicle wheel, while at the inside vehicle wheel suspension the joint 52 is shifted downward due to the rebounding of the vehicle wheel, thus increasing the stabilizer reaction so as to enhance the above-described stabilizing operation.

Although the present invention has been described in the above with respect to a particular embodiment thereof, it will be apparent to those skilled in the art that the present invention is not limited to the shown embodiment and various other embodiments are possible within the scope of the present invention.

For example, although the arm portion of the stabilizer is connected with the real lower control arm 30 through the connection link, the stabilizer may be connected with the front lower control arm 28. Further, although the suspension is constructed as the double wishbone type front suspension in the above-described embodiment, the suspension may be constructed as the MacPherson strut type suspension by replacing the combination of the upper arm 10b of the carrier and the upper control arm 16 by the MacPherson strut rigidly connected with the bearing portion 10a of the carrier at its lower end portion and pivotably connected with the vehicle body at its upper end portion.

As will be clear from the above descriptions, as the pivot point at the upper end of the connection link is positioned to be higher than the pivot point at the lower end thereof according to the present invention, the reaction force generated n the stabilizer acts in the direction of biasing the control arm forward through the connection link at the outside vehicle wheel suspension and acts in the direction of biasing the control arm rearward through the connection link at the inside vehicle wheel suspension, the both biasing actions biasing the steering wheel toward its neutral position.

Therefore, the force for biasing the steering wheel toward its neutral position can be determined independently of the positions of a pair of control arms which determine the position of the king pin axis, and therefore, independently of the caster trail determined by the position of the king pin axis, thus making it possible to improve the self returning performance of the steering wheel without sacrificing the steering stability.

In a suspension for a steering vehicle wheel in a vehicle wherein a carrier for rotatably supporting the steering vehicle wheel is supported by a pair of control arms spaced from one another substantially in a longitudinal direction of the vehicle and pivotably connected with the carrier at outside ends thereof and with a vehicle body at inside ends thereof, a connection link is pivotably connected with an arm portion of a stabilizer having an elastically deformable portion adapted to be elastically deform by a movement of the arm portion at an upper end thereof and with one of the pair of control arms at a lower end thereof with the upper pivoted end of the connection link being positioned at a rear side of the lower pivoted end of the connection link so that both the steering movement and the bounding and rebounding movement of the steering vehicle wheel enhance the effect of the reaction of the stabilizer to return the steering wheel to its neutral position.

**Claims**

1. A suspension for a steering vehicle wheel in a vehicle having a stabilizer including an elastically deformable portion and a pair of arm portions extending from opposite ends thereof so as to be able to elastically deform said elastically deformable portion by a movement thereof, comprising a carrier for rotatably supporting the steering vehicle wheel, a pair of control arms spaced from one another substantially in a longitudinal direction of the vehicle to be pivotably connected with said carrier at outside ends thereof and with a vehicle body at inside ends thereof, and a connection link pivotably connected with said arm portion of said stabilizer at an upper end thereof and with one of said pair of control arms at a lower end thereof, wherein said upper pivoted end of said connection link is positioned at a rear side of said lower pivoted end of said connection link.

2. A suspension according to claim 1, wherein the suspension is of the double wishbone type, and said pair of control arms are the lower front and rear control arms in the double wishbone type suspension.

3. A suspension according to claim 2, wherein said connection link is connected with the lower rear control arm.

4. A suspension according to claim 3, wherein said connection link is connected to a middle portion of said lower rear control arm.

# FIG. 1

# FIG. 2

# F I G. 3

# FIG. 4

# FIG. 5

European
Patent Office

EUROPEAN SEARCH
REPORT

Application Number

EP 91 10 1156

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 153 272   (GENERAL MOTORS)<br>* Column 3, line 41 - column 4, line 34; claim 2; figures 1-3 * | 1,2 | B 60 G 21/055 |
| Y,A | FR-A-2 426 585   (TOYO KOGYO CO., LTD)<br>* Page 15, lines 3-13; figures 8-9 * | 1-2,3-4 | |
| A | US-A-4 798 397   (MAZDA MOTOR CO.)<br>* Column 1, lines 14-25; column 4, lines 22-63; figures 1-4 * | 1 | |
| A | US-A-4 570 969   (NISSAN MOTOR CO.)<br>* Column 3, line 41 - column 4, line 71, figures 1-2 * | 1-4 | |
| P,A | WO-A-9 011 200   (GKN TECHNOLOGY LTD)<br>* Page 5, line 4 - page 6, line 2; figures 1,2 * | 1-4 | |

TECHNICAL FIELDS
SEARCHED (Int. Cl.5)

B 60 G

The present search report has been drawn up for all claims

| Place of search | Date of completion of search | Examiner |
|---|---|---|
| The Hague | 03 May 91 | GONZALEZ GRANDA C. |